# EUROPEAN PATENT APPLICATION

(11) **EP 4 610 320 A2**
(43) Date of publication of application: **03.09.2025**
(21) Application number: 25188375.7
(22) Date of filing: 04.08.2022
(51) Int. Cl.: C09D 163/00

(54) **EPOXY PRIMER IN A COATINGS SYSTEM**

(30) Priority: 05.08.2021 US 202163203943 P
(62) Divisional of application: 22786563.1
(71) Applicant: SWIMC LLC, Cleveland, Ohio 44115 (US)
(72) Inventor: NAIK, Hemant A., Warrensville Heights, 44128 (US); LI, Zhicheng, Warrensville Heights, 44128 (US)
(74) Representative: Abitz & Partner

(57) **Abstract**

Provided herein is an epoxy primer comprising: 1) a first component comprising: a) an epoxy resin blend comprising at least one bisphenol resin; b) at least one epoxy silane; c) magnesium oxide; and d) lithium manganese oxide, lithium phosphate, lithium carbonate, lithium molybdate, or combinations thereof; and 2) a second component comprising: a) at least one phenalkamine; b) at least one amine curing agent; and c) at least one silane monomer, at least one silane oligomer, at least one siloxane resin, or combinations thereof. Also described is a method of making the epoxy primer and a coatings system comprising the epoxy primer.

## Description

### FIELD

The present disclosure relates generally to an epoxy primer comprising: 1) a first component comprising: a) an epoxy resin blend comprising at least one bisphenol resin; b) at least one epoxy silane; c) magnesium oxide; d) lithium manganese oxide, lithium phosphate, lithium carbonate, lithium molybdate, or combinations thereof; and 2) a second component comprising: a) at least one phenalkamine; b) at least one amine curing agent; and c) at least one silane monomer, at least one silane oligomer, at least one siloxane resin, or combinations thereof. Also described is a method of making the epoxy primer and a coatings system comprising the epoxy primer.

### BACKGROUND

Conventionally, many coatings systems that are applied to a substrate may be subject to damage from the environment. Often, these substrates are metal. For example, environmental damage may occur from exposure to oxygen, water, heat or cold, salt, and other chemicals, leading to corrosion of the substrate in the environment. As such, a primer coating layer (commonly referred to as a "primer") may be used on the substrate in order to protect the substrate from corrosion and other environmental damage. The primer is often applied directly to a bare or pretreated metal substrates. In some cases, particularly where the primer is to be applied over a bare metal substrates, the primer layer is deposited from a composition that includes a material, such as an acid or pretreatment, which enhances the adhesion of the primer layer to the substrate. In some instances, the pretreatment often acts to passivate the metal substrate and promotes corrosion resistance. After application of the primer, a decorative topcoat may be applied over the primer.

Historically, corrosion resistant primer coatings and metal pretreatments have utilized chromium compounds and/or other heavy metals to achieve a desired level of corrosion resistance and adhesion to subsequently applied coatings. However, the use of chromium and/or other heavy metals results in the production of waste streams that pose environmental concerns and disposal issues. More recently, efforts have been made to reduce or eliminate the use of chromium. As a result, coating compositions have been developed that contain other materials added to inhibit corrosion. These materials have included, for example, zinc phosphate, iron phosphate, zinc molybdate, and calcium molybdate particles. However, certain properties such as corrosion resistance, chemical resistance (including salt), and water resistance has been inferior to their chromium containing counterparts.

In view of these challenges with conventional primers and other coatings, the need therefore remains for primers and other coatings that are substantially free of chromium and/or other heavy metals, wherein the compositions can, in at least some cases, exhibit corrosion resistance properties superior to a similar non-chromium containing coatings and similar to chromium-containing coatings as well as other advantages. In addition, it would be desirable to provide methods for preparing such chromium-free primers and using these chromium-free primers in a coatings system. Further, there is also a need for substrates in which such chromium-free primers may be applied.

### SUMMARY

The embodiments of what is described herein are not intended to be exhaustive or to limit what is provided in the claimed subject matter and disclosed in the detailed description. Rather, the embodiments are chosen and described so that others skilled in the art may appreciate and understand the principles and practices of what is provided in the claimed subject matter.

An epoxy primer comprising: 1) a first component comprising: a) an epoxy resin blend comprising at least one bisphenol resin; b) at least one epoxy silane; c) magnesium oxide; d) lithium manganese oxide, lithium phosphate, lithium carbonate, lithium molybdate, or combinations thereof; and 2) a second component comprising: a) at least one phenalkamine; b) at least one amine curing agent; and c) at least one silane monomer, at least one silane oligomer, at least one siloxane resin, or combinations thereof. In some embodiments, at least one bisphenol resin comprises at least one bisphenol A resin, at least one bisphenol F resin, at least one epoxy novolac resin, or combinations thereof. In some embodiments, at least one siloxane resin is amino functional. In other embodiments, at least one siloxane resin is epoxy functional. In many embodiments, the epoxy primer is substantially chromate-free.

Also described is a method of making the epoxy primer and a coatings system comprising the epoxy primer. Further, an article comprising: 1) a substrate having at least one surface; and 2) the coatings system described herein at least partially applied on the at least one surface of the substrate is also disclosed.

To the accomplishment of the foregoing and related ends, the following description set forth certain illustrative aspects and implementations. These are indicative of but a few of the various ways in which one or more aspects may be employed. Other aspects, advantages and novel features of the disclosure will become apparent from the following detailed description when considered.

### DETAILED DESCRIPTION

Aspects of what is described herein are disclosed in the following description related to specific embodiments. Alternative embodiments may be devised without departing from the scope of what is described herein. Additionally, well-known embodiments of what is described herein may not be described in detail or will be omitted so as to not obscure the relevant details of what is described herein. Further, to facilitate an understanding of the description, discussion of several terms used herein follows.

As used herein, the word "exemplary" means "serving as an example, instance, or illustration." The embodiments described herein are not limiting, but rather exemplary only. It should be understood that the described embodiments are not necessarily to be construed as preferred or advantageous over other embodiments. Moreover, the term "embodiment(s)" does not require that all embodiments include the discussed feature, advantage, or mode of operation.

The present disclosure relates generally to coatings systems, that provide advantageous improvements over current coatings. The present disclosure also relates generally to primers in a coatings system, namely an epoxy primer, that provide improvements over current primers. It has been discovered that the epoxy primer described herein can surprisingly lead to improved corrosion resistance, chemical resistance, and water resistance and substantially improved performance properties over other chromium-free primers, as well as other advantages.

In the embodiments described herein, an epoxy primer may comprise two components. In many embodiments, an epoxy primer may comprise: 1) a first component comprising: a) an epoxy resin blend comprising at least one bisphenol resin b) at least one epoxy silane; c) magnesium oxide; d) lithium manganese oxide, lithium phosphate, lithium carbonate, lithium molybdate, or combinations thereof; and 2) a second component comprising: a) at least one phenalkamine; b) at least one amine curing agent; and c) at least one silane monomer, at least one silane oligomer, at least one siloxane resin, or combinations thereof.

In many embodiments, the epoxy primer described herein comprises: 1) a first component comprising: a) 10-50% wt. epoxy resin blend comprising at least one bisphenol resin ; b) 1-6 % wt. at least epoxy silane; c) 5-30 % wt. magnesium oxide; and d) 1-20 % wt. lithium manganese oxide, lithium phosphate, lithium carbonate, lithium molybdate, or combinations thereof; and 2) a second component comprising: a) 5-50% wt. at least one phenylamine; b) 5-60% wt. at least one amine curing agent; and c) 1-30% wt. at least one silane monomer. Other ranges are also contemplated.

### First Component

In many embodiments, the first component comprises at least one bisphenol resin in the epoxy resin blend. The bisphenol resin may comprise at least one bisphenol A resin, at least one bisphenol F resin, at least one epoxy novolac resin, or combinations thereof. In many embodiments, the first component comprises at least one bisphenol resin in the epoxy resin blend may range from 10% to 50% by weight. In many embodiments, the at least one bisphenol resin may range from 11% to 49% by weight. In other embodiments, the at least one bisphenol resin can, for example, range (by weight) from 10% to 45%, from 10% to 40%, from 10% to 35%, from 13% to 50%, from 13% to 47%, from 13% to 47%, from 15% to 45%, from 18% to 45%, from 20% to 50%, from 20% to 45%, from 20% to 40%, from 25% to 50%, from 25% to 49%, from 25% to 47%, from 25% to 45%, from 25% to 40%, from 25% to 38%, from 27% to 49%, from 27% to 47%, from 27% to 45%, from 27% to 43%, from 30% to 50%, from 30% to 49%, from 30% to 47%, from 30% to 45%, from 35% to 50%, from 35% to 45%, from 35% to 42%, and from 35% to 40%. Other ranges are also contemplated.

In many embodiments, the first component comprises at least one bisphenol A resin for the at least one bisphenol resin in the epoxy resin blend. In many embodiments, the at least one bisphenol A resin may range from 10% to 50% by weight. In other embodiments, the at least one bisphenol A resin can, for example, range (by weight) from 10% to 45%, from 10% to 40%, from 10% to 35%, from 13% to 50%, from 13% to 47%, from 15% to 50%, from 15% to 45%, from 18% to 45%, from 20% to 50%, from 20% to 45%, from 20% to 40%, from 25% to 50%, from 25% to 45%, from 25% to 40%, from 27% to 50%, from 27% to 43%, from 30% to 50%, from 30% to 49%, from 30% to 45%, from 35% to 50%, from 35% to 45%, and from 35% to 40%. Additionally, at least one bisphenol A resin may also range from 0% to 50% by weight. In other embodiments, the at least one bisphenol A resin can, for example, range (by weight) from 0% to 49%, from 0% to 45%, from 0% to 40%, from 0% to 35%, from 0% to 30%, from 0% to 25%, from 0% to 20%, from 0% to 15%, and from 0% to 10%. Other ranges for bisphenol A are also contemplated.

In many embodiments, the first component comprises at least one bisphenol F resin for the at least one bisphenol resin in the epoxy resin blend. In many embodiments, the at least one bisphenol F resin may range from 10% to 50% by weight. In other embodiments, the at least one bisphenol F resin can, for example, range (by weight) from 11% to 50%, from 11% to 49%, from 13% to 47%, from 15% to 50%, from 15% to 45%, from 18% to 45%, from 20% to 50%, from 20% to 45%, from 20% to 40%, from 25% to 50%, from 25% to 45%, from 25% to 40%, from 25% to 35%, from 27% to 43%, from 30% to 50%, from 30% to 45%, from 30% to 40%, from 35% to 50%, from 35% to 45%, and from 35% to 40%. Additionally, at least one bisphenol F resin may also range from 0% to 50% by weight. In other embodiments, the at least one bisphenol F resin can, for example, range (by weight) from 0% to 49%, from 0% to 45%, from 0% to 40%, from 0% to 35%, from 0% to 30%, from 0% to 25%, from 0% to 20%, from 0% to 15%, and from 0% to 10%. Other ranges for bisphenol F are also contemplated.

In many embodiments, the first component comprises at least one epoxy novolac resin for the at least one bisphenol resin in the epoxy resin blend, which may provide higher crosslinking densities. Epoxy novolac resins may have more reactive groups along their chemical backbone and offer a more highly cross-linked polymer than other epoxies. In many embodiments, at least one epoxy novolac resin may range from 10% to 50% by weight. In other embodiments, the epoxy novolac resin can, for example, range (by weight) from 11% to 50%, from 13% to 50%, from 13% to 47%, from 15% to 50%, from 15% to 45%, from 18% to 45%, from 20% to 50%, from 20% to 45%, from 20% to 40%, from 25% to 50%, from 25% to 45%, from 25% to 40%, from 25% to 35%, from 27% to 43%, from 30% to 50%, from 30% to 45%, from 30% to 40%, from 35% to 50%, from 35% to 45%, and from 35% to 40%. Additionally, at least one epoxy novolac resin may also range from 0% to 50% by weight. In other embodiments, the at least one epoxy novolac resin can, for example, range (by weight) from 0% to 49%, from 0% to 45%, from 0% to 40%, from 0% to 35%, from 0% to 30%, from 0% to 25%, from 0% to 20%, from 0% to 15%, and from 0% to 10%. Other ranges for epoxy novolac resin are also contemplated.

In some embodiments, at least one epoxy novolac resin is at least one epoxy phenol novolac resin. An epoxy phenol novolac (EPN) is an epoxy resin where the epoxide functional group is attached to the phenolic oxygen of a phenolic novolac in which the multi-functionality allows for a high degree of cross-linking when cured. Epoxy novolac resins may typically be produced either by reacting phenols with formaldehyde or by reacting phenol novolac resin with epichlorohydrin. They are highly functional resins with about 2 to 6 epoxy groups per molecule (typical epoxy resins have less epoxy groups per molecule), which results in a highly cross-linked polymer upon curing compared to typical epoxies. The epoxy novolac resins are often used as an alternative to bisphenol A-based epoxies and phenolic resins. In general, the epoxy novolac resins have better chemical resistance due to their much higher functionality as well as increased heat resistance when compared to other epoxy resins. In some embodiments, at least one epoxy novolac resin may be modified. In one embodiment, at least one epoxy novolac resin may be modified with at least one siloxane, at least one rubber, or combinations thereof. Other epoxy novolac resin modifications are also contemplated.

In many embodiments, the first component comprises at least one epoxy silane. In some embodiments, at least one epoxy silane comprises glycidal epoxy functional silane, cycloaliphatic epoxy silane, or combinations thereof. In one embodiment, at least one epoxy silane comprises 2-(3,4 epoxycyclohexyl)ethyltrimethoxysilane. In another embodiment, at least one epoxy silane comprises 3-glycidoxypropyltrimethoxysilane. In yet another embodiment, at least one epoxy silane comprises 3-glycidoxypropyltriethoxysilane. Other epoxy silanes are also contemplated.

In many embodiments, the first component comprises 1% to 6 % by weight at least one epoxy silane. In other embodiments, at least one epoxy silane can, for example, range (by weight) from 1% to 5.5%, from 1% to 5%, from 1% to 4.5%, from 1% to 4%, from 1.5% to 6%, 1.5% to 5.5%, from 1.5% to 5%, from 1.5% to 4.5%, from 1.5% to 4%, from 2% to 6%, 2% to 5.5%, from 2% to 5%, from 2% to 4.5%, from 2% to 4%, from 2.5% to 6%, 2.5% to 5.5%, from 2.5% to 5%, from 2.5% to 4.5%, from 2.5% to 4%, from 3% to 6%, from 3% to 5.5%, from 3% to 5%, from 3% to 4.5%, from 3% to 4%, from 3.5% to 6%, from 3.5% to 5.5%, from 3.5% to 5%, from 3.5% to 4.5%, 3.5% to 4%, from 4% to 6%, from 4% to 5.5%, from 4% to 5%, from 4.5% to 5%, and from 5% to 6%. Other ranges are also contemplated.

In many embodiments, the first component comprises magnesium oxide. In many embodiments, the particle size of the magnesium oxide may be less than 150 µm. In some embodiments, the particle size of the magnesium oxide may be less than 100 µm, for example, less than 125 µm, less than 100 µm, less than 75 µm, less than 50 µm, less than 25 µm, less than 20 µm, less than 15 µm, less than 10 µm, less than 5, less than 3 µm, and less than 2 µm. In one embodiment, the particle size of the magnesium oxide ranges from 1.0 µm to 2.0 µm. In other embodiments, the magnesium oxide may be nanoparticle size.

In many embodiments, the magnesium oxide may range from 5% to 30 % by weight. In other embodiments, the magnesium oxide can, for example, range (by weight) from 5% to 25%, from 10% to 30%, from 11% to 29%, from 12% to 30%, from 12% to 25%, from 13% to 30%, from 13% to 28%, from 13% to 25%, from 15% to 30%, from 15% to 25%, from 17% to 30%, from 17% to 25%, from 20% to 30%, from 20% to 27%, and from 20% to 25%. Other ranges are also contemplated.

In many embodiments, the first component comprises 1% to 20 % by weight lithium manganese oxide, lithium phosphate, lithium carbonate, lithium molybdate, or combinations thereof. In other embodiments, the lithium manganese oxide, lithium phosphate, lithium carbonate, lithium molybdate, or combinations can, for example, range (by weight) from 2% to 20%, from 2% to 19%, from 3% to 20%, from 3% to 18%, from 4% to 20%, from 5% to 20%, from 5% to 17%, from 5% to 15%, from 7% to 20%, from 7% to 15%, from 10% to 20%, from 10% to 18%, and from 10% to 15%. Other ranges are also contemplated.

In some embodiments, the first component further comprises at least one silane. In one embodiment, at least one silane is an organofunctional silane. In another embodiment, at least one silane is an epoxy functional silane. In yet another embodiment, at least one silane is a vinyl functional silane. In many embodiments, at least one silane comprises 0% to 30% by weight. In other embodiments, at least one silane can, for example, range (by weight) from 2% to 30%, from 2% to 25%, from 2% to 20%, from 2% to 15%, from 2% to 13%, from 2% to 10%, from 2% to 8%, from 2% to 5%, from 3% to 30%, from 3% to 25%, from 3% to 20%, from 3% to 15%, from 3% to 13%, from 3% to 10%, from 3% to 8%, from 3% to 5%, from 5% to 30%, from 5% to 25%, from 5% to 20%, from 5% to 15%, from 5% to 13%, from 5% to 10%, and from 5% to 8%. Other ranges are also contemplated.

In some embodiments, the first component further comprises at least one reactive diluent. As described herein, at least one reactive diluent is a low-molecular-weight, low-viscosity compound that may be used to reduce the viscosity or enhance the solubility of a material. In one embodiment, at least one reactive diluent is monofunctional. In another embodiment, at least one reactive diluent is multi-functional. In many embodiments, at least one reactive diluent comprises cresyl glycidyl ether, glycidyl ether of castor oil, glycidyl ether of alcohols (e.g., dodecanol or mixtures thereof), glycidyl ether of 1,6-hexanediol, glycidyl ether of neopentyl glycol, glycidyl ether (e.g. glycidyl ether of cashew nutshell liquid), glycidyl ethers of alcohols, cyclic carbonates (e.g., propylene carbonate), acetoacetates, and acrylates (e.g., trimethylolpropane triacrylate and hexanediol diacrylate), urethane acrylates and oligomers, or combinations thereof. In many embodiments, at least one reactive diluent comprises 0% to 30% by weight. In other embodiments, at least one reactive diluent can, for example, range (by weight) from 2% to 30%, from 2% to 25%, from 2% to 20%, from 2% to 15%, from 2% to 13%, from 2% to 10%, from 2% to 8%, from 2% to 5%, from 3% to 30%, from 3% to 25%, from 3% to 20%, from 3% to 15%, from 3% to 13%, from 3% to 10%, from 3% to 8%, from 3% to 5%, from 5% to 30%, from 5% to 25%, from 5% to 20%, from 5% to 15%, from 5% to 13%, from 5% to 10%, and from 5% to 8%. Other ranges are also contemplated.

### Second Component

For many embodiments, the second component may comprise: a) at least one phenalkamine; b) at least one amine curing agent; and c) at least one silane monomer, at least one silane oligomer, at least one siloxane resin, or combinations thereof.

In many embodiments, the second component comprises 5% to 50% by weight of at least one phenalkamine. Phenalkamines may be used to cure the epoxy. In many embodiments, at least one phenalkamine may be waterborne. In other embodiments, at least one phenalkamine can, for example, range (by weight) from 5% to 45%, from 5% to 40%, from 10% to 50%, from 10% to 50%, from 10% to 45%, from 10% to 40%, from 15% to 50%, from 15% to 45%, from 15% to 40%, from 15% to 35%, from 20% to 50%, from 20% to 45%, from 20% to 40%, from 25% to 50%, and from 25% to 45%. Other ranges are also contemplated.

In many embodiments, the second component also comprises 5% to 60% by weight of at least one amine curing agent. At least one amine curing agent may comprise mannich bases, ethylene amine adducts, modified aliphatic amines, multifunctional or highly functional aliphatic amines, polyetheramines, phenalkamides, thiols or combinations thereof. Other amine curing agents are also contemplated. In other embodiments, at least one amine curing agent can, for example, range (by weight) from 5% to 55%, from 5% to 50%, from 5% to 45%, from 5% to 40%, from 10% to 60%, from 10% to 55%, from 10% to 50%, from 10% to 50%, from 10% to 45%, from 10% to 40%, from 15% to 60%, from 15% to 55%, from 15% to 50%, from 15% to 45%, from 15% to 40%, from 15% to 35%, from 20% to 60%, from 20% to 55%, from 20% to 50%, from 20% to 45%, from 20% to 40%, from 25% to 60%, from 25% to 55%, from 25% to 50%, and from 25% to 45%. Other ranges are also contemplated.

In many embodiments, the second component also comprises 1% to 30% by weight of at least one silane monomer. At least one silane monomer may be at least one epoxy functional silane, at least one amino functional silane, or combinations thereof. In one embodiment, at least one epoxy functional silane is a glycidal epoxy functional silane. In one embodiment, at least one amino functional silane is a diamino functional silane. In other embodiments, at least one silane monomer can, for example, range (by weight) from 1% to 25%, from 1% to 20%, from 1% to 15%, from 2% to 30%, from 2% to 25%, from 5% to 30%, from 5% to 25%, from 5% to 20%, from 8% to 30%, from 8% to 25%, from 8% to 20%, from 10% to 30%, from 10% to 25%, from 10% to 20%, from 15% to 30%, from 15% to 25%, from 15% to 20%, from 20% to 30%, and from 25% to 30%. Other ranges are also contemplated.

In some embodiments, at least one silane monomer is organic. In other embodiments, at least one silane monomer is inorganic. In one embodiment, at least one silane monomer is a blend of organic and inorganic silane monomers.

In some embodiments, the at least one siloxane resin is amino functional. In other embodiments, the at least one siloxane resin is epoxy functional. In one embodiment, the at least one siloxane resin is a blend of amino functional and epoxy functional. In some embodiments, the amino functionality and/or epoxy functionality may be an acrylate, a thiol, or combinations thereof. Other functionalities are also contemplated.

In many embodiments, the epoxy primer described herein may further comprise at least one wetting agent, at least one dispersant, at least one corrosion inhibitor, at least one pigment, at least one thickener, at least one solvent, at least one plasticizer, at least one accelerator, or combinations thereof. In some embodiments, at least one pigment is a functional pigment. In one embodiment, at least one pigment is calcium metasilicate. In another embodiment, at least one pigment is a spherical pigment. Other components used in typical epoxy primer formulations may be used in the epoxy primer described herein.

In some embodiments the epoxy primer may further compromise, at least one or more toughening agents. In some embodiments, at least one or more toughening agents comprise ATBN (amino terminated butadiene nitrile rubber), CTBN (carboxyl terminated butadiene nitrile rubber), or combinations thereof. Other nitrile rubbers are also contemplated. In one embodiment, at least one or more toughening agents comprises an acrylic core shell rubber.

In some embodiments, at least one corrosion inhibitor is an inorganic corrosion inhibitor. In some embodiments, the inorganic corrosion inhibitor may be zinc phosphate, calcium borosilicate, strontium phosphosilicate, or combinations thereof. In other embodiments, the at least one corrosion inhibitor is an organic corrosion inhibitor. In some embodiments, the organic corrosion inhibitor is amino carboxylate, silane based sol-gel, zirconium-silica hybrid sol-gel, alkyl ammonium salt of an organic diacid, lithium carbonate, lithium phosphate, or combinations thereof. In one embodiment, the at least one corrosion inhibitor is lithium carbonate. Other corrosion inhibitors are also contemplated. In some embodiments, the at least one corrosion inhibitor may be used as a pretreatment and applied on at least one surface of at least one substrate prior to the application of the chrome free primer.

### Optional Third Component

In some embodiments, the epoxy primer may further comprise a third component. In some embodiments, the third component may comprise at least one accelerator, at least one flexibilizer, at least one solvent, or combinations thereof. At least one solvent may aid in application properties.

In many embodiments, the epoxy primer is substantially chromate free. In one embodiment, the epoxy primer has no chromate. In one embodiment, the epoxy primer has less than 1% wt. chromate. In another embodiment, the epoxy primer has less than 0.5% wt. chromate. In yet another embodiment, the epoxy primer has less than 0.25% wt. chromate. In one embodiment, the epoxy primer has less than 0.1% wt. chromate. In one embodiment, the epoxy primer has less than 0.05% wt. chromate. In one embodiment, the epoxy primer has less than 0.02% wt. chromate. In one embodiment, the epoxy primer has less than 0.01% wt. chromate.

In many embodiments, the epoxy primer has a Filiform after 1000 hours and salt fog corrosion after 3000 hours performance is less than 3.125 mm per BS EN3665/ASTM B117. In many embodiments, the epoxy primer is substantially chemically resistant to hydraulic fluid. In many embodiments, the epoxy primer has a reverse impact of 80 inch-lb. (0.92 kg-m). In many embodiments, the epoxy primer has a flexibility of 1/8 inch (3.175 mm) by mandrel.

In many embodiments, a method of making the epoxy primer described herein is provided.

In many embodiments, a coatings system comprising the epoxy primer described herein is provided. In many embodiments, the coatings system is at least partially applied to at least one surface of at least one substrate. In some embodiments, at least one substrate is a metal, glass, ceramic, plastic, wood, concrete, or combinations thereof. In some embodiments, the metal is aluminum or aluminum alloy. In one embodiment, the metal is aluminum. In another embodiment, the metal is aluminum alloy. In yet another embodiment, the substrate is steel. In one embodiment, the metal is steel alloy. In one embodiment, the metal is magnesium. In one embodiment, the metal is iron. In yet another embodiment, the metal is titanium. In one embodiment, the metal is titanium alloy. Other metals are also contemplated.

For the coatings system, at least one additional layer of coatings or other treatments may be applied to the epoxy primer described herein.

In some embodiments, at least one additional layer of coatings or other treatments may be applied to at least one substrate, and the epoxy primer described herein may be applied over the at least one additional layer of coatings or other treatments. In one embodiment, the at least one substrate is pretreated prior to application of the coatings system. Where the substrate is pretreated prior to application of the coatings system, the at least one substrate may undergo mechanical abrasion, chemical abrasion, cleaner(s), or combinations thereof.

In many embodiments, one coat or layer of the epoxy primer described herein is applied to at least one substrate. In many embodiments, one coat or layer of the epoxy primer can range from 0.5 to 10 mils by thickness. In other embodiments, one coat or layer of the epoxy primer can, for example, range (by thickness) from 0.5 to 8 mils, from 1 to 8 mils, from 0.5 to 7 mils, from 1 to 7 mils, from 0.5 to 6 mils, from 1 to 6 mils, from 0.5 to 5 mils, from 1 to 5 mils, from 0.5 to 4 mils, from 1 to 4 mils, from 0.5 to 3 mils, from 1 to 3 mils, from 0.5 to 2 mils, and from 1 to 2 mils. In other embodiments, at least one additional epoxy primer at least partially applied on the epoxy primer.

In some embodiments, the coatings system described herein may further comprise a pretreatment. Pretreatments may substantially passivate any corrosion-promoting particles in alloys. In many embodiments, the pretreatment is at least partially applied to the at least one substrate and the epoxy primer is subsequently at least partially applied on the pretreatment. In one embodiment, an additional pretreatment may be done in preparation of the coatings system. In some embodiments, the pretreatment is a sol-gel, a chemical conversion coating, or combinations thereof. In one embodiment, the chemical conversion coating is a chromate conversion coating.

In many embodiments, the coatings system described herein further comprises at least one topcoat at least partially applied on the epoxy primer. At least one topcoat may be applied for decorative or aesthetic reasons. At least one topcoat may also be applied for weatherability. In some embodiments, at least one topcoat comprises polyurethane, polyurea acrylic, polysiloxane, fluoropolymers, or combinations thereof. Other chemistries for at least one topcoat may be contemplated. In some embodiments, the at least one topcoat is a one-part coating. In other embodiments, the at least one topcoat is a two-part coating. At least one topcoat may be used for decorative purposes. At least one topcoat may also be used to further coat the substrate, especially metal, to protect it.

In one embodiment, the coatings system described herein may further comprise at least one sanding surfacer at least partially applied on the epoxy primer, wherein at least one topcoat is at least partially applied on at least one sanding surfacer. A sanding surfacer may be used to fill and cover surface imperfections to create a smooth surface for topcoat application. The sanding surfacer may be epoxy, polyurethane, or combinations thereof.

In many embodiments, the coatings system described herein may further comprise at least one clearcoat, wherein the clearcoat is at least partially applied on the at least one topcoat. At least one clearcoat may provide additional protection of the substrate, especially metal substrates.

In many embodiments, an article comprising: 1) a substrate having at least one surface; and 2) the coatings system described herein and at least partially applied on the at least one surface of the substrate. In some embodiments, the substrate comprises wood, wood composite, metal, plastic, paper, leather, fabric, ceramic, or any combination thereof. In one embodiment, the metal is aluminum. In another embodiment, the metal is aluminum alloy. In yet another embodiment, the substrate is steel. In one embodiment, the metal is steel alloy. In one embodiment, the metal is magnesium. In one embodiment, the metal is iron. In yet another embodiment, the metal is titanium. In one embodiment, the metal is titanium alloy. Other metals are also contemplated.

### Experimental Data

### Example Formulation 1

| Part A | |
|---|---|
| Raw Material Description | % w/w |
| bisphenol A epoxy resin | 10-20 |
| triglycidyl ether | 5-10 |
| trimethylolpropane triacrylate | 0-5 |
| epoxy silane | 1-6 |
| wetting and dispersing additive | 0-5 |
| lithium orthophosphate | 5-15 |
| magnesium oxide | 5-15 |
| aluminum triphosphate | 5-15 |
| calcium silicate | 10-20 |
| titanium dioxide | 5-10 |
| Thixotrope | 0-5 |
| methyl propyl ketone | 10-15 |
| Total weight | 100.00 |

| Part B | |
|---|---|
| Raw Material Description | % w/w |
| benzyl alcohol | 10-20 |
| modified aliphatic amine | 40-60 |
| Phenalkamine | 5-20 |
| amino silane | 1-15 |
| Total weight | 100.00 |

### Example Formulation 2

| Part A | |
|---|---|
| Raw Material Description | % w/w |
| bisphenol A epoxy resin | 10-20 |
| epoxy novolac resin | 1-10 |
| triglycidyl ether | 5-10 |
| trimethylolpropane triacrylate | 0-5 |
| epoxy silane | 1-6 |
| wetting and dispersing additive | 0-5 |
| lithium manganese oxide | 5-15 |
| magnesium oxide | 5-15 |
| aluminum triphosphate | 5-15 |
| calcium silicate | 10-20 |
| titanium dioxide | 5-10 |
| Thixotrope | 0-5 |
| methyl propyl ketone | 10-15 |
| Total weight | 100.00 |

| Part B | |
|---|---|
| Raw Material Description | % w/w |
| benzyl alcohol | 10-20 |
| modified aliphatic amine | 40-60 |
| Phenalkamine | 5-20 |
| amino silane | 1-15 |
| Total weight | 100.00 |

In comparison to a typical two-part system (referred to as "Commercial Product" in the tables below) where the first part contains epoxy resin and acrylate urethane and the second part contains polyamides and amines, Example Formulation 1 and Example Formulation 2 provided improved results for both Filiform and salt fog testing over the Commercial Product. These differences were especially evident in the Filiform testing and salt fog field testing.

**Table 1: Filiform Results at 1000 hours using BS EN 3665**

| **Filiform Results - BS EN 3665 (1000 hours)** | | |
|---|---|---|
| Sample | Result (mm) | Max allowable (mm) |
| Commercial product | 2.81 | 3.2 |
| Example 1 | 1.06 | 3.2 |
| Example 2 | 1.44 | 3.2 |

**Table 2: Salt Fog Results at 3000 hours using ASTM B117**

| Coating | **Salt Fog ASTM B117 (3000 hours)** | | | | | |
|---|---|---|---|---|---|---|
| | **Field** | | | **Scribe** | | |
| | Blister | | Rust (rating as per ISO-4628-3) | Blister | | Rust (rating as per ISO-4628-3) |
| | (rating as per ISO 4628-2) | | | (rating as per ISO 4628-2) | | |
| | Density | Size | Grade | Density | Size | Grade |
| Commercial product | 4 | 4 | 3 | 2 | 3 | 2 |
| Example 1 | 1 | 1 | 2 | 1 | 1 | 2 |
| Example 2 | 1 | 1 | 2 | 2 | 2 | 2 |

### Embodiments

The following embodiments are contemplated. All combinations of features and embodiments are contemplated.

Embodiment 1: An epoxy primer comprising: 1) a first component comprising: a) an epoxy resin blend comprising at least one bisphenol resin; b) at least one epoxy silane; c) magnesium oxide; and d) lithium manganese oxide, lithium phosphate, lithium carbonate, lithium molybdate, or combinations thereof; and 2) a second component comprising: a) at least one phenalkamine; b) at least one amine curing agent; and c) at least one silane monomer, at least one silane oligomer, at least one siloxane resin, or combinations thereof.

Embodiment 2: An embodiment of Embodiment 1, wherein the at least one bisphenol resin comprises at least one bisphenol A resin, at least one bisphenol F resin, at least one epoxy novolac resin, or combinations thereof.

Embodiment 3: An embodiment of any of Embodiments 1-2, wherein the at least one epoxy silane comprises glycidal epoxy functional silane, cycloaliphatic epoxy silane, or combinations thereof.

Embodiment 4: An embodiment of any of Embodiments 1-3, wherein the first component further comprises at least one silane.

Embodiment 5: An embodiment of any of Embodiments 1-4, wherein the first component further comprises at least one reactive diluent.

Embodiment 6: An embodiment of any of Embodiments 1-5, wherein the at least one siloxane resin is amino functional.

Embodiment 7: An embodiment of any of Embodiments 1-6, wherein the at least one siloxane resin is epoxy functional.

Embodiment 8: An embodiment of any of Embodiments 1-7, wherein the epoxy primer comprises: 1) a first component comprising: a) 10-50% wt. epoxy resin blend comprising at least one bisphenol resin; b) 1-6 % wt. at least epoxy silane; c) 5-30 % wt. magnesium oxide; and d) 1-20 % wt. lithium manganese oxide, lithium phosphate, lithium carbonate, lithium molybdate, or combinations thereof; and 2) a second component comprising: a) 5-50% wt. at least one phenalkamine; b) 5-60% wt. at least one amine curing agent; and c) 1-30% wt. at least one silane monomer.

Embodiment 9: An embodiment of any of Embodiments 1-8 further comprising at least one wetting agent, at least one dispersant, at least one corrosion inhibitor, at least one pigment, at least one thickener, at least one solvent, at least one plasticizer, at least one accelerator, or combinations thereof.

Embodiment 10: An embodiment of Embodiment 9, wherein the at least one corrosion inhibitor is an organic corrosion inhibitor.

Embodiment 11: An embodiment of Embodiment 9, wherein the at least one corrosion inhibitor is an inorganic corrosion inhibitor.

Embodiment 12: An embodiment of Embodiment 9, wherein the at least one corrosion inhibitor is lithium carbonate.

Embodiment 13: An embodiment of any of Embodiments 1-12 further comprising a third component.

Embodiment 14: An embodiment of Embodiment 13, wherein the third component comprises at least one accelerator, at least one flexibilizer, at least one solvent, or combinations thereof.

Embodiment 15: An embodiment of any of Embodiments 1-14, wherein the epoxy primer is substantially chromate free.

Embodiment 16: An embodiment of any of Embodiments 1-15, wherein a Filiform corrosion performance is less than 3.125 mm after 1000 hours per BS EN3665/ASTM B117 and salt spray performance (ASTM B117) after 3000 hours is less than 3.125 mm.

Embodiment 17: A method of making the epoxy primer of any of Embodiments 1-16.

Embodiment 18: A coatings system comprising the epoxy primer of any of Embodiments 1-16.

Embodiment 19: An embodiment of Embodiment 18, wherein the coatings system is at least partially applied to at least one surface of at least one substrate.

Embodiment 20: An embodiment of any of Embodiments 18-19, wherein the at least one substrate is a metal, glass, ceramic, plastic, wood, concrete, or combinations thereof.

Embodiment 21: An embodiment of Embodiment 20, wherein the metal is aluminum or aluminum alloy.

Embodiment 22: An embodiment of any of Embodiments 18-21, wherein the at least one substrate is pretreated prior to application of the coatings system.

Embodiment 23: An embodiment of any of Embodiments 18-22 further comprising at least one additional epoxy primer at least partially applied on the epoxy primer.

Embodiment 24: An embodiment of any of Embodiments 18-23 further comprising a pretreatment, wherein the pretreatment is at least partially applied to the at least one substrate and the epoxy primer is at least partially applied on the pretreatment.

Embodiment 25: An embodiment of Embodiment 24 wherein the pretreatment is a sol-gel, a chemical conversion coating, or combinations thereof.

Embodiment 26: An embodiment of Embodiment 25, wherein the chemical conversion coating is a chromate conversion coating.

Embodiment 27: An embodiment of any of Embodiments 18-26 further comprising at least one topcoat at least partially applied on the epoxy primer.

Embodiment 28: An embodiment of Embodiment 27 wherein the at least one topcoat is a one-part coating.

Embodiment 29: An embodiment of Embodiment 27 wherein the at least one topcoat is a two-part coating.

Embodiment 30: An embodiment of any of Embodiments 27-29 further comprising at least one sanding surfacer at least partially applied on the epoxy primer, wherein at least one topcoat is at least partially applied on at least one sanding surfacer.

Embodiment 31: An embodiment of any of Embodiments 18-30 further comprising at least one clearcoat, wherein the clearcoat is at least partially applied on the at least one topcoat.

Embodiment 32: An article comprising: 1) a substrate having at least one surface; and 2) the coatings system of any of Embodiments 18-31 at least partially applied on the at least one surface of the substrate; wherein the substrate comprises wood, wood composite, metal, plastic, paper, leather, fabric, ceramic, or any combination thereof.

What has been described above includes examples of the claimed subject matter. All details and any described modifications in connection with the Background and Detailed Description are within the spirit and scope of the claimed subject matter will be readily apparent to those of skill in the art. In addition, it should be understood that aspects of the claimed subject matter and portions of various embodiments and various features recited below and/or in the appended claims may be combined or interchanged either in whole or in part. In the foregoing descriptions of the various embodiments, those embodiments which refer to another embodiment may be appropriately combined with other embodiments as will be appreciated by one of skill in the art. Furthermore, those of ordinary skill in the art will appreciate that the foregoing description is by way of example only, and is not intended to limit the claimed subject matter, realizing that many further combinations and permutations of the claimed subject matter are possible. It is, of course, not possible to describe every conceivable combination of components or methodologies for purposes of describing the claimed subject matter, but one of ordinary skill in the art may recognize. Accordingly, the claimed subject matter is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. An epoxy primer comprising:
a first component comprising:
at least one bisphenol resin;
at least one epoxy silane;
magnesium oxide; and
lithium manganese oxide, lithium phosphate, lithium carbonate, lithium molybdate, or combinations thereof; and
a second component comprising:
at least one phenalkamine;
at least one amine curing agent; and
at least one silane monomer, at least one silane oligomer, at least one siloxane resin, or combinations thereof.

2. The epoxy primer of Claim 1, wherein the at least one bisphenol resin comprises at least one bisphenol A resin, at least one bisphenol F resin, at least one epoxy novolac resin, or combinations thereof, and/or wherein the at least one epoxy silane comprises glycidal epoxy functional silane, cycloaliphatic epoxy silane, or combinations thereof.

3. The epoxy primer of any of Claims 1-2, wherein the first component further comprises at least one silane or at least one reactive diluent.

4. The epoxy primer of any of Claims 1-3, wherein the at least one silane monomer or at least silane oligomer resin is amino functional or epoxy functional.

5. The epoxy primer of any of Claims 1-4, wherein the epoxy primer comprises:
a first component comprising:
10-50% wt. epoxy resin blend comprising at least one bisphenol resin;
1-6 % wt. at least epoxy silane;
5-30 % wt. magnesium oxide; and
1-20 % wt. lithium manganese oxide, lithium phosphate, lithium carbonate, lithium molybdate, or combinations thereof; and
a second component comprising:
5-50% wt. at least one phenalkamine;
5-60% wt. at least one amine curing agent; and
1-30% wt. at least one silane monomer.

6. The epoxy primer of any of Claims 1-5 further comprising at least one wetting agent, at least one dispersant, at least one corrosion inhibitor, at least one pigment, at least one thickener, at least one solvent, at least one plasticizer, at least one accelerator, or combinations thereof, preferably wherein the at least one corrosion inhibitor is an organic corrosion inhibitor, an inorganic corrosion inhibitor or lithium carbonate.

7. The epoxy primer of any of Claims 1-6 further comprising a third component, preferably wherein the third component comprises at least one accelerator, at least one flexibilizer, at least one solvent, or combinations thereof.

8. The epoxy primer of any of Claims 1-7, wherein the epoxy primer is substantially chromate free, and/or wherein a Filiform corrosion performance (BS EN3665) after 1000 hours and salt spray performance (ASTM B117) after 3000 hours is less than 3.125 mm.

9. A method of making the epoxy primer of any of Claims 1-8.

10. A coatings system comprising the epoxy primer of any of Claims 1-8.

11. The coatings system of Claim 10, wherein the coatings system is at least partially applied to at least one surface of at least one substrate, preferably wherein the at least one substrate is a metal, glass, ceramic, plastic, wood, concrete, or combinations thereof, further preferably wherein the metal is aluminum or aluminum alloy.

12. The coatings system of any of Claims 10-11, wherein the at least one substrate is pretreated prior to application of the coatings system, and/or wherein the coatings system further comprises at least one additional epoxy primer at least partially applied on the epoxy primer.

13. The coatings system of any of Claims 10-12 further comprising a pretreatment, wherein the pretreatment is at least partially applied to the at least one substrate and the epoxy primer is at least partially applied on the pretreatment, preferably wherein the pretreatment is a sol-gel, a chemical conversion coating, or combinations thereof, further preferably wherein the chemical conversion coating is a chromate conversion coating.

14. The coatings system of any of Claims 10-13 further comprising at least one topcoat at least partially applied on the epoxy primer, preferably wherein the at least one topcoat is a one-part coating or wherein the at least one topcoat is a two-part coating.

15. The coatings system of any of Claims 10-14 further comprising at least one sanding surfacer at least partially applied on the epoxy primer, wherein at least one topcoat is at least partially applied on at least one sanding surfacer, and/or further comprising at least one clearcoat, wherein the clearcoat is at least partially applied on the at least one topcoat.

16. An article comprising:
a substrate having at least one surface; and
the coatings system of any of Claims 10-15 at least partially applied on the at least one surface of the substrate;
wherein the substrate comprises wood, wood composite, metal, plastic, paper, leather, fabric, ceramic, or any combination thereof.
